## Europäisches Patentamt

## European Patent Office

## Office européen des brevets

(11) Veröffentlichungsnummer: **0 261 411**
**A2**

# (12) EUROPÄISCHE PATENTANMELDUNG

(21) Anmeldenummer: **87112200.8**

(22) Anmeldetag: **22.08.87**

(51) Int. Cl.4: **A01N 59/20** , **A01N 25/24**

(30) Priorität: **22.09.86 DE 3632116**

(43) Veröffentlichungstag der Anmeldung:
**30.03.88 Patentblatt 88/13**

(84) Benannte Vertragsstaaten:
**AT BE CH DE ES FR GB GR IT LI LU NL SE**

(71) Anmelder: **Benckiser-Knapsack GmbH**
**Dr. Albert-Reimann-Strasse 2**
**D-6802 Ladenburg(DE)**

(72) Erfinder: **Kleemann, Stephan, Dr.**
**Schlederloh 15**
**D-8021 Icking(DE)**
Erfinder: **Claus, Günter, Dr.**
**Lerchweg 24**
**D-6803 Edingen/Neckarshausen(DE)**

(74) Vertreter: **Grussdorf, Jürgen, Dr. et al**
**Patentanwälte Zellentin & Partner**
**Rubensstrasse 30**
**D-6700 Ludwigshafen(DE)**

(54) **Kupferhaltige Polymere, Verfahren zu ihrer Herstellung und ihre Anwendung.**

(57) Die Erfindung betrifft die Verwendung von Kupferaminokomplexen aus einem wasserlöslichen Kupfersalz und einem aminhaltigen Polymeren als Fungizide. Diese Komplexe bilden auf Oberflächen gut haftende Überzüge.

EP 0 261 411 A2

## Verwendung von Kupferaminkomplexen als Fungizide

Gegenstand der vorliegenden Erfindung ist die Verwendung von Kupferaminkomplexen als Fungizide.

Die Verwendung von Kupfersalzen in der Landwirtschaft zur Bekämpfung von Pilzkrankheiten an Kulturpflanzen wird bereits seit langem praktiziert. Um die Wirksamkeit der Kupferbehandlung über einen längeren Zeitraum zu garantieren, wurden früher in Wasser schwer oder unlösliche anorganische Kupfersalze verwendet, z.B. Kupferoxychlorid. Weiterhin sind ölige Formulierungen von Kupfersalzen auf Basis niedermolekularer, organischer Carbonsäuren bekannt, die allerdings wegen der öligen Basis für die Behandlung von Pflanzen weniger geeignet sind.

In der DE-AS 28 07 293, der US-PS 39 00 504, der GB-PS 5 99 443 und der GB-PS 5 93 416 sowie der DE-AS 22 02 448 werden fungizide Mittel beschrieben, bei denen an sich schwer lösliche Kupfersalze organischer Säuren durch Komplexbildung mit Ammoniak in wäßrige Lösung gebracht werden. Nach dem Aufbringen dieser wäßrigen Lösngen auf die zu behandelnden Oberflächen, insbesondere Kulturpflanzen, verdampft mit dem Lösungsmittel auch das Ammoniak, so daß sich die schwer lös lichen Kupfersalze zurückbilden und eine langsame Freigabe von Kupferionen und damit eine länger anhaltende fungizide Wirkung bewirken.

Da diese Salze auf den Pflanzenoberflächen nur schlecht haften, so daß sie vom Regen als Feststoff abgewaschen werden können, ist in den vorstehenden Literaturstellen die Eignung dieser Substanzen als Fungizide überwiegend nur für die Behandlung von Textilien und Holz beschrieben und über die Brauchbarkeit im Pflanzenschutz nichts ausgesagt.

Besser haftende Kupfersalze werden gemäß GB-PS 13 94 990 und EP-PS 39 788 dadurch erhalten, daß man Kupfersalze von Polycarbonsäuren (Acrylsäure-oder Methacrylsäurepolymerisate) mit Ammoniak in die wasserlöslichen, komplexen Kupferverbindungen überführt und in dieser Form appliziert. Wiederum bildet sich auf der Blattoberfläche durch Verdampfen des Ammoniaks das schwer lösliche Kupfersalz zurück, aus dem Kupferionen mit fungizider Wirkung langsam freigesetzt werden. Nachteilig an diesen Lösungen ist es, daß zur Erzielung einer ausreichenden Komplexierung der Kupferionen ein erheblicher Überschuß an Ammoniak zugegeben werden muß, so daß die Lösungen stark alkalisch reagieren sowie bei der Applikation die Pflanze schädigen und andererseits durch das Verdampfen des Ammoniaks eine erhebliche Geruchsbelästigung auftritt.

Aus der DE-AS 30 45 251 sind Kunstharze mit komplexgebundenem Kupfer bekannt, welche aus epoxidgruppenfreien Mannich-Basen hergestellt werden, die als Pigmente, Härtungskatalysatoren, Antischaummittel oder Haftverbesserer dienen. Über eine Verwendung als Fungizid wird keine Aussage getroffen.

In der Patentschrift DE-PS 35 22 000 wird die Herstellung kupferhaltiger Komplexe von Polyamidaminen sowie ihre Verwendung als Fungizide beschrieben. Gemeinsam ist diesen Komplexen eine Polymergrundstruktur mit einer ggf. vernetzten Polyethylenkette und Aminoalkylamid-Substituenten. Vorzugsweise werden die Polyamidamine durch Umsetzung von Polyacrylnitril mit Alkylendiaminen hergestellt. Es wurde angenommen, daß das Zusammenwirken der Amino-und Amidgruppen für die vorteilhaften Eigenschaften der damit hergestellten Kupferkomplexe notwendig ist.

Die vorerwähnten Produkte bilden zwar stabile wässrige Lösungen, die sich gut auf Oberflächen applizieren lassen und weisen auch eine gute fungizide Wirkung auf, jedoch ist die Haftung, wie sich durch Modellversuche an entsprechend imprägnierten Filterpapieren zeigt, noch nicht optimal. Es stellte sich daher die Aufgabe neue Kupferkomplexe zu finden, die stabile, wässrige Lösungen bilden, die gute fungizide Eigenschaften besitzen, und gegenüber den bekannten Mitteln eine bessere Haftung, d.h. geringere Ablösung bzw. Auswaschung des Kupfers mit Wasser aufweisen.

Die Lösung dieser Aufgabe gelingt durch die in den Ansprüchen näher gekennzeichneten Maßnahmen.

Es ist überraschend, daß Kupferaminkomplexe von Polyaminen, d.h. Verbindungen ohne die Amin/Amidkombination, nicht nur stabile, wässrige Kupferkomplexlösungen bilden, sondern daß derartige Kupferkomplexlösungen auf Grund ihres Lösungsverhaltens bessere fungizide Eigenschaften im Vergleich zu anorg. Kupfersalzen sowie Kupferpolyacrylat oder Kupfercarbonsäurepräparaten aufweisen. Erstaunlicherweise übertreffen diese Kupferpolyaminkomplexlösungen in ihrem Retentionsvermögen für die Kupferionen sogar die bereits guten Werte der vergleichbaren Kupfer-Polyamidaminkomplex-Lösungen deutlich.

Polyamine im Sinne der Erfindung sind aus entsprechenden Monomeren durch Polymerisation oder Polyaddition oder Polykondensation gebildete kettenförmige Makromoleküle mit Molgewichten von ca. 3000 bis 5.000.000, vorzugsweise 5000 bis 1.000.000, die entweder in der Kette oder als Substituenten Aminogruppen enthalten, wobei auf 2-20 C-Atome eine Aminogruppe entfällt. Vorzugsweise ist auf 2 - 3 C-

c) die Bestimmung wurde wie unter b) beschrieben durchgeführt, es wurde jedoch die Lösung abdekantiert, das Filterpapier herausgenommen und das Becherglas ausgespült.

Die Ergebnisse der Titrationen nach diesen drei Methoden sind in der Tabelle I wiedergegeben. Dabei beziehen sich die Angaben der besseren Anschaulichkeit wegen direkt auf den prozentualen Anteil an Kupfer, welcher unter den vorgegebenen Bedingungen vom Polymer zurückgehalten wird.

Der K-Wert wird nach H.Fikentscher, Cellulosechemie 13, S. 48-64 sowie 71-74 (1932) bei 30°C bestimmt. Dabei bedeutet K = k x 1000.

Alle Mengenangaben beziehen sich auf Gewichte.

Die folgenden Beispiele sollen die Erfindung erläutern.

Beispiel 1

Zu 5 Teilen einer Lösung aus 25 Teilen eines handelsüblichen Polyethylenimins (Polymin SK, (Warenzeichen der BASF, Ludwigshafen)) in 100 Teilen Wasser, werden unter Zusatz von 5 Teilen Wasser bei 50 ° C 0,6 Teile Kupfer (II)acetat x 1 $H_2O$ portionsweise eingetragen und bei dieser Temperatur 15 Minuten gerührt.

Es resultiert eine stabile dunkelblaue Lösung mit einem Kupfergehalt von 1,8 %.

Beispiel 2

Zu 5 Teilen einer Lösung aus 25 Teilen eines handelsüblichen Polyamins in 100 Teilen Wasser, werden unter Zusatz von 5 Teilen Wasser bei 50 °C 0,8 Teile Kupfer(II)acetat x 1 $H_2O$ portionsweise eingetragen und bei dieser Temperatur 15 Minuten gerührt.

Es resultiert eine stabile dunkelblaue Lösung mit einem Kupfergehalt von 2,4 %.

Beispiel 3

Zu 5 Teilen einer Lösung aus 25 Teilen eines handelsüblichen Polyamins in 100 Teilen Wasser, werden unter Zusatz von 5 Teilen Wasser bei 50 °C 0,7 Teile Kupfer(II)acetat x 1 $H_2O$ portionsweise eingetragen und bei dieser Temperatur 15 Minuten gerührt.

Es resultiert eine stabile dunkelblaue Lösung mit einem Kupfergehalt von 2,1 %.

Beispiel 4

(Vergleichsbeispiel)

Zu 20 Teilen einer 4.6 %igen Lösung eines Polyamidamins gemäß DE-P 34 32 569.7 Beispiel 1 mit einem K-Wert von 34,1 werden bei 50 °C 1,57 Teile Kupfer(II)acetat x 1 $H_2O$ portionsweise eingetragen und bei dieser Temperatur 15 Minuten gerührt.

Es resultiert eine stabile blaugrüne Lösung mit einem Kupfergehalt von 2,3 %.

Beispiel 5

(Vergleichsbeispiel)

Zu 20 Teilen einer Lösung aus 35 Teilen eines Polyacrylsäurehomopolymeren mit einem K-Wert von 22.3 in 100 Teilen Wasser, werden nach Regulierung des pH-Wertes auf 6,0 unter Zusatz von 15,3 Teilen Wasser bzw. NaOH, bei 50 °C 1,2 Teile Kupfer(II)acetat x 1 $H_2O$ portionsweise eingetragen und bei dieser Temperatur 15 Minuten gerührt.

Es resultiert eine stabile dunkelgrüne Lösung mit einem Kupfergehalt von 1,1 %.

Tabelle I
---------

ungelöstes Kupfer (in %)

| Beispiel | Methode a) | Methode b) | Methode c) |
|----------|-----------|-----------|-----------|
| Nr. 1 | 89,5 | 84,7 | 84,9 |
| Nr. 2 | 91,7 | 88,1 | 89,8 |
| Nr. 3 | 83,6 | 81,4 | 81,9 |
| Vergleich Nr. 4 | 23,3 | 21,3 | 21,8 |
| Nr. 5 | 0 | 0 | 0 |
| Kupferacetat x 1 $H_2O$ | 0 | 0 | 0 |

**Ansprüche**

1. Verwendung von Kupferaminkomplexen, die ein wasserlösliches Kupfersalz und mindestens eine zur Komplexbildung ausreichende Menge eines Polyamins enthalten als funigizide Pflanzenschutzmittel.

2. Verwendung gemäß Anspruch, dadruch gekennzeichnet, daß das Polyamin in einem 0,5 bis 5-fachen molaren Überschuß, bezogen auf das Verhältnis von Amingruppen zu Kupferionen, enthalten ist.

3. Verwendung gemäß Anspruch 1 bis 2, dadurch gekennzeichnet, daß der Komplex als wässrige Lösung vorliegt.

4. Verwendung gemäß Anspruch 1 bis 3, dadurch gekennzeichnet, daß die Lösung zusätzlich noch 0 bis 50 Gew.-% Ammoniak bezogen auf die Menge des Polyamins enthält.

5. Verwendung gemäß Anspruch 1 - 4, dadurch gekennzeichnet, daß die Lösung 0 bis 95 Gew.-% an organischem Lösungsmittel, bezogen auf die Gesamtmenge an Lösungsmittel enthält.

6. Verwendung gemäß Anspruch 1 bis 5, dadurch gekennzeichnet, daß die Lösung eine Konzentration von 0,01 bis 10 Gew.-%, vorzugsweise 0,1 bis 7,5 Gew.-%, bezogen auf Kupfer, aufweist.

7. Verwendung gemäß Anspruch 1 bis 6, dadurch gekennzeichnet, daß die Lösung zusätzlich eine haftverbessernde Komponente, vorzugsweise eine Dispersion eines Acrylsäure-bzw. Methacrylsäure-homo-bzw. copolymeren, in einer Konzentration von 0 bis 20 Gew.-% bezogen auf Polyamin enthält.

8. Verwendung gemäß Anspruch 1 bis 7, dadurch gekennzeichnet, daß die Lösung zusätzlich ein Polyamidamin, in einer Konzentration von 0 bis 20 Gew.-% bezogen auf Polyamin enthält.

9. Verwendung von Kupferaminkomplexen gemäß Anspruch 1 -8, zusammen mit Herbiziden, Insektiziden, Waschstumsregulatoren und/oder anderen Fungiziden, als Pflanzenschutzmittel.